# EUROPEAN PATENT APPLICATION

(11) **EP 4 744 643 A1**
(43) Date of publication of application: **20.05.2026**
(21) Application number: 24212724.9
(22) Date of filing: 13.11.2024
(51) Int. Cl.: A61J 1/00, C09J 7/00, H01M 10/42, H01M 10/48, H01M 10/613, H01M 10/658

(54) **ELECTRONIC SYSTEM MANAGEMENT TAPE AND BATTERY**

(71) Applicant: Lohmann GmbH & Co. KG, 56567 Neuwied (DE)
(72) Inventor: Reukauf, Phil-Dominik, 56584 Meinborn (DE)

(57) **Abstract**

In order to provide a multitude of functions to electronic systems, such as batteries, in an efficient way, an electronic system management tape for application on an electronic system is proposed, comprising a sensor layer, an electrically insulating layer, an adhesive layer for affixing to the electronic system, and a communication unit for communicating between the sensor layer and an electronic system management unit.

## Description

The invention relates to an electronic system management tape and a battery comprising such an electronic system management tape.

With electronic systems getting more and more common in our everyday lives, the requirements which need to be fulfilled by these electronic systems are steadily increasing and becoming more varied. Safety concerns in particular cause a need for constant monitoring of the electronic system's status and measures to prevent injuries or loss of life in case of a malfunction, such as a thermal runaway event.

For example, there are many known ways of arranging and fixing components for monitoring and/or managing of parameters inside of a battery. US 10,374,446 B2 discloses a combination of a heater and a temperature sensor to make sure the battery stays at a temperature that is optimal for operation. The heater is fixed within the battery by means of applying double-sided adhesive tapes on opposing sides. While this solution makes use of components that are already available on the market, it requires additional application steps as well as increased material usage. And if additional functions for monitoring and safety are to be included, these would also require their own double-sided adhesive tape for fixation. Especially in cases where each individual battery cell needs to be monitored, providing and applying the required amount of double-sided adhesive tape increases the costs and complexity of the manufacturing process in a significant way. In the field of batteries this is even more of an issue because there is a need to increase an energy density of the battery as high as possible, leaving little to no space for components that don't store energy.

It is therefore an object of the invention to provide a multitude of functions to a battery in an efficient way. This object is achieved by the features of claims 1 and 15, while other embodiments and improvements of the invention may be taken from the dependent claims.

An electronic system management tape for application on an electronic system, preferably a battery, is proposed, which comprises a sensor layer, an electrically insulating layer, an adhesive layer for affixing to the electronic system, the adhesive layer being preferably positioned on an outer side of the electronic system management tape, and a communication unit for communicating between the sensor layer and an electronic system management unit, preferably a battery management system.

Furthermore, a battery is proposed, comprising at least one individual battery cell, preferably a multitude of battery cells forming at least one battery cell stack, further comprising a battery management system and an electronic system management tape as described herein, wherein the electronic system management tape is affixed to the battery cell or at least one of the battery cells of the battery cell stack.

This way, a multitude of different functions can be provided while only requiring a single application step, since the electronic system management tape combines both the functional component, and the fixation means in a single laminate. Advantageously, the electronic system management tape is a modular and adaptable solution, which, regardless of the number of functions and redundancies which need to be provided, can always be applied the same way.

A battery in the context of this invention is to be understood as an electrical energy source which may comprise a casing and which comprises at least one battery cell, preferably a multitude of battery cells, which may be arranged inside of the casing in form of at least one battery cell stack. The battery cells may be prismatic cells, pouch cells, cylindrical cells or any other type of battery cell. Depending on a shape of the individual battery cells, the battery cell stack may be either assembled by arranging the battery cells in form of an aligned vertical stack, an aligned horizontal stack, or a number of rows with are offset to each other. The latter is mostly used for cylindrical cells. Each battery cell comprises a positive battery terminal and a negative battery terminal, which are preferably both arranged on one side of the battery cell, but may also be arranged on opposite sides of the battery cell in some embodiments. Preferably, the battery cells of each battery cell stack are arranged in a way that all battery terminals are arranged on one side of the battery cell stack.

The electronic system management unit may be configured to receive and evaluate signals of the sensor layer as well as trigger actions depending on the signals. Preferably, the electronic system management unit comprises a printed circuit board. The printed circuit board may be a traditional circuit board comprising metallic tracks on a firm, insulating substrate, or a flexible circuit board comprising tracks made of conductive ink or conductive paste which are coated onto a flexible, insulating foil. Preferably, the electronic system management unit comprises a further communication unit for communicating between the electronic system management unit and external devices. The further communication unit may use any type of communication known to the person skilled in the art. For example, the further communication unit may use wireless communication and comprise a Bluetooth component, an RFID component, a radio component and/or an optical communication component. Alternatively, the further communication unit may use physical communication and comprise wires consisting of metal, conductive ink and/or conductive paste. Preferably, the further communication unit comprises a bus system. The external device may for example be a central control unit of the electronic system, or an output unit such as a display unit for example, configured to forward a warning to a user, wherein the warning may be triggered by the signals of the sensor layer. In case of the electronic system management unit being a battery management system, it may be placed anywhere inside of the casing, preferably, the electronic system management unit is arranged on the same side of the battery cell stack on which the battery terminals are arranged.

The battery may be part of a battery pack, the battery pack comprising an outer casing as well as any number of batteries housed within the outer casing, which are often referred to as 'battery modules' in this context. The battery and/or battery pack may be part of an electric vehicle, a mobile phone device, a stationary battery system, a computer device or any other type of electronic device requiring an integrated electrical energy source.

The electronic system management tape may be arranged in any relation to the battery cell or cells. In one configuration, the electronic system management tape may be arranged between two adjacent battery cells. This configuration allows for the electronic system management tape to provide functions such as, for example, an electrical insulation of adj acent battery cells via the electrically insulating layer, a monitoring of battery cell parameters via the sensor layer as well as additional functions such as, for example, a thermal insulation and/or a compensation of pressure due to battery cell breathing. In another configuration, the electronic system management tape may be placed on a side of the battery cell stack. This configuration allows for the electronic system management tape to provide functions such as a transfer of heat from the battery cell stack to a heat sink of the battery or an increased shock resistance of the battery cell stack. In yet another configuration, the electronic system management tape may wrap around at least three sides of one of the battery cells. This configuration allows for the electronic system management tape to provide optimal electrical and/or thermal insulation of individual battery cells.

The electronic system management tape may be a one-sided tape and only comprise a single adhesive layer. Alternatively, the electronic system management tape may be a double-sided tape and comprise a further adhesive layer positioned on a further outer side of the electronic system management tape, which is opposite to the outer side. The electronic system management tape may be part of a wound tape roll. Alternatively, the electronic system management tape may be provided as a flat adhesive sheet. Preferably, the electronic system management tape comprises at least one release liner which covers the adhesive layer and/or the further adhesive layer and which is configured to be removed before an application of the electronic system management tape.

While the electronic system management tape is primarily intended for usage within batteries, it is of course also applicable in any other electronic system which benefits from a management of parameters such as temperature, current, voltage, moisture, pH and/or pressure. Just to name a few examples, the electronic system management tape may also be used to provide additional functionality for engine systems, brake systems, fuel cells, cooling systems and heating systems.

The electronic system management tape may comprise at least one additional layer and in particular any number of additional layers. The additional layer or layers may include an additional adhesive layer and/or an additional non-adhesive layer. Preferably, the layers of the electronic system management tape are arranged in a way that the non-adhesive layers are fixed relative to each other via adhesive layers positioned between them. The additional layer or layers may include a foil layer, a textile layer and/or a foam layer. The additional layer or layers may include a layer comprising a metal, a ceramic, a glass, a plastic and/or a cellulose material. The additional layer or layers may include a thermally conductive layer, a thermally insulating layer, an electrically conductive layer and/or an electrically insulating layer. The additional layer or layers may include a further sensor layer and/or a further electrically insulating layer. The electronic system management tape may comprise layers of different sizes or extensions, in particular different lengths, widths and/or thicknesses. For example, at least one of the layers may extend beyond an electronic system management tape main body. Alternatively, all layers of the electronic system management tape may be the same size or extension. Preferably, at least one of the layers, especially preferably the sensor layer, is, in a top-down view of the electronic system management tape, surrounded by the other layers. Preferably, the layers of the electronic system management tape have a rectangular and/or cuboid shape.

The sensor layer may comprise a substrate and at least one sensor. The sensor may be arranged on a surface of the substrate or embedded within the substrate. The sensor may be a surface-mounted device or a through-hole device. A surface-mounted device is to be understood as an electronic component comprising preferably firm, metallic contacts which may be electrically connected using solder or electrically conductive adhesives. Sensors which are surface-mounted devices are commonly referred to as sensor chips. A through-hole device is to be understood as an electronic component comprising preferably firm, metallic pins configured to be plugged into corresponding holes of the substrate to establish an electrical connection. The electronic system management tape may only comprise a single sensor layer. Alternatively, the electronic system management tape may comprise multiple sensor layers which may measure parameters individually or cooperate with each other. For example, the electronic system management tape may comprise a sensor laminate consisting of a spacer layer sandwiched between two sensor layers, the two sensor layers comprising at least one pair of electrodes arranged on opposite sides of the spacer layer. This configuration is especially suitable for detecting battery cell expansion, in which case the spacer layer is preferably a compressible foam layer, and each of the two sensor layers preferably constitutes one half of a capacitor. The distance between the capacitor halves corresponds to an expansion of the battery cells and can be measured by a change in the capacitance. Preferably, the electronic system management unit defines a threshold capacitance and is configured to warn the user about a battery malfunction when the threshold capacitance is reached or exceeded.

The sensor layer may comprise any number and any type of sensors. For example, the sensor layer may comprise at least one temperature sensor, at least one current sensor, at least one distance sensor, at least one moisture sensor, at least one voltage sensor, at least one strain sensor, at least one motion sensor and/or at least one pressure sensor. The sensor or the sensors may be arranged anywhere on the substrate and in any type or regular or irregular pattern. Preferably, in case of the electronic system management tape being applied on the battery and the sensor layer comprising at least one current sensor and/or at least one voltage sensor, the current sensor and/or voltage sensor is preferably arranged in the vicinity of the positive battery terminal and/or negative battery terminal.

The electrically insulating layer comprises at least one electrically insulating material. An electrically insulating material in the context of this invention may be understood as a material exhibiting a resistivity high enough to prevent battery currents, which exhibit a voltage of up to 800 V, from penetrating the electrically insulating layer even if a thickness of the electrically insulating layer is 100 µm or lower. Preferably, the electrically insulating material exhibits a specific resistivity of at least 10⁹ Ωm, especially preferably of at least 10¹¹Ωm and most preferably of at least 10¹³Ωm, at a temperature of 20°C. The resistivity is measured according to the norm DIN EN 61340-2-3 VDE 0300-2-3:2017-05. The electrically insulating material may be a cellulose, such as paper, cork or cardboard, or a ceramic. Preferably, the electrically insulating material is a plastic, such as PET, PI, PP or PVC. Preferably, the electrically insulating layer has a thickness of at least 5 µm, especially preferably at least 30 µm.

The adhesive layer may comprise any type of adhesive. An adhesive may be understood as a composition created by a polymerization of monomers into polymers and a curing of these polymers to form a polymer network. The adhesives may be configured to form non-covalent, adhesive bonds to surfaces after application. For example, the adhesive layer may comprise a rubber-based adhesive, an epoxide-based adhesive, a polyurethane-based adhesive, a silicone-based adhesive or any combination of these adhesives. Preferably, the adhesive layer comprises an acrylate-based adhesive. The adhesive layer may comprise a pressure-sensitive adhesive. A pressure-sensitive adhesive may be understood as an adhesive which is tacky at 25°C before and during an application. The adhesive being tacky may be understood as it being able to form non-covalent adhesive bonds by pressure alone. The adhesive may comprise at least one curing agent, be cured before the application and be permanently tacky. Alternatively, the adhesive may comprise at least one curing agent, be uncured or partially cured before the application and be configured to be fully cured after the application, thereby losing its tackiness. The method of curing the pressure-sensitive adhesive may require a certain amount of heat, radiation or moisture.

Alternatively, or additionally, the adhesive layer may comprise a hotmelt adhesive. A hotmelt adhesive may be understood as an adhesive which is not tacky at 25°C and melts at a predefined temperature, usually in the range of 30-150°C. In a molten state, the hotmelt adhesive is tacky. The hotmelt adhesive may be cured before an application and may be able to be melted and solidified any number of times. Alternatively, the hotmelt adhesive may be uncured or partially cured before the application and configured to be fully cured after the application, thereby losing its ability to melt. The method of curing the pressure-sensitive adhesive may require a certain amount of heat, radiation or moisture.

The adhesive of the adhesive layer may comprise any additive or additives known in the art, such as antioxidants, fillers, flame retardant additives, intumescent additives, foaming agents, polymerization agents, curing agents, catalysts, tackifying resins, thickening agents, electrically conductive particles, electrically insulating particles, thermally conductive particles and/or thermally insulating particles.

The communication unit may only provide a one-way communication from the sensor layer to the electronic system management unit. Preferably, the communication unit provides a two-way communication between the sensor layer and the electronic system management unit. The communication unit may use any type of communication known to persons skilled in the art. For example, the communication unit may use wireless communication and comprise a Bluetooth component, an RFID component, a radio component and/or an optical component. Alternatively, the communication unit may use physical communication and comprise wires consisting of metal, conductive ink and/or conductive paste. Preferably, the communication unit is electrically connected to the sensor layer. For example, the communication unit may be a printed device, such as a printed cable, for example, which is coated onto the substrate. The communication unit may communicate to the electronic system management unit constantly. In this configuration, the electronic system management unit may check up on the communication unit in regular intervals, for example by sending a signal and waiting for a response. If the checkup shows that the communication unit has been compromised by things such as a heating up or an ingress of moisture, the electronic system management unit may warn the user about a system malfunction. This configuration allows for the usage of very inexpensive and simple designs for the communication unit which comprise of a single circuit configured to be broken when a condition indicative of a battery failure occurs. Alternatively, the communication unit may communicate with the electronic system management unit in regular intervals. In this configuration, the communication unit preferably comprises at least one antenna. This configuration allows for a regular or constant monitoring of the parameter, which may be used by the electronic system management unit to predict the occurrence of system failures before they happen or monitor an aging process of the electronic system.

In a further embodiment of the invention, the communication unit may comprise a connector portion extending outwards from an electronic system management tape main body and a connector arranged on the connector portion, preferably on its end. A connector is to be understood as a component providing a physical, electrically conductive connection. The connector may be any type of connector known to the person skilled in the art, such as a crimp connector, a solder connector, a plug connector or a weld connector, for example. The connector portion extending outwards from the electronic system management tape main body is to be understood as in the connector portion being arranged in a way that alongside its length, at least part of the connector portion is free of any surrounding layers of the electronic system management tape. Preferably, in case the electronic system management tape is applied on a battery cell or a battery cell stack, the connector portion extends outwards towards the side of the battery cell or battery cell stack where the battery terminals and the battery management system are located. The connector portion may extend through a gap in the printed circuit board of the electronic system management unit, wherein the connector is arranged on a side of the electronic system management unit opposite to a component that the electronic system management tape is affixed to. This embodiment has the advantage of allowing access to the connector without the need to remove the electronic system management unit. Preferably, the connector portion only extends to a side of the electronic system management unit facing the component that the electronic system management tape is affixed to. This embodiment is especially advantageous when the electronic system management tape is used as a battery cell wrapping, in which case the connector portion can additionally provide a wrapping of the side of the battery cell or cells facing the battery management system. Preferably, the connector portion comprises at least two tracks which run along its length. The tracks may be metal wires. Preferably, the tracks are part of a printed circuit. The connector portion may be a part of one of the layers of the electronic system management tape. In this configuration, the connector portion is preferably part of the substrate of the sensor layer. This way, tracks may be coated onto the substrate which directly connect the sensor and the connector via the connector portion. Preferably, the connector portion is a connector strip which comprises a further connector arranged on a further end of the connector portion opposite to the end. The further connector connects the connector portion to the electronic system management tape, preferably, the sensor layer. The connector and the further connector may be the same type of connector or different types of connectors. This way, adapting the electronic system management tape to different types of electronic systems, in which the distance between the electronic system management tape and the electronic system management unit is different, can be simplified, since only a size of the connector portion has to be adjusted, while the layers of the electronic system management tape can stay the same.

In a further embodiment of the invention, the connector may comprise an anisotropic conductive adhesive film. An anisotropic conductive adhesive film may be understood as a film which is electrically conductive perpendicular to its adhesive surface and electrically insulating parallel to its adhesive surface. The film being electrically insulating parallel to its adhesive surface is to be understood as the film being sufficiently electrically insulating to prevent a short circuit of electrical contacts which are placed next to each other on the adhesive surface. A minimal distance in which the electrical contacts are still insulated from each other is commonly referred to as a "pitch". The connector may comprise a pressure-sensitive anisotropic conductive adhesive. In this configuration, the connector preferably comprises a release liner covering an adhesive surface of the connector and configured to be removed during an application of the connector. Alternatively, the connector may comprise a hotmelt anisotropic conductive adhesive. Preferably, the connector comprises at least one additive comprising an electrically conductive material. The additive may be a multitude of electrically conductive particles. The electrically conductive particles may for example consist of a metal, a conductive polymer or carbon. Alternatively, the electrically conductive particles may comprise a metal coating and a main body consisting of a glass, a plastic or a ceramic. Alternatively, the connector may be devoid of any electrically conductive additive and comprise at least one conductive polymer. For example, the connector may comprise at least one PEDOT:PSS-based adhesive. This way, connecting the electronic system management tape to the electronic system management unit can be done without the need for a crimping, soldering and/or welding process.

In a further embodiment of the invention, the sensor layer may comprise a substrate and at least one sensor coated onto a surface of the substrate. Preferably, the sensor is a printed device. A printed device is to be understood as an electronic component consisting of a conductive ink and/or conductive paste which forms circuits after being coated onto the substrate. The sensor may comprise any number of printed layers coated onto the substrate. The sensor may be coated onto the substrate using any coating method or printing method known in the art, such as for example curtain coating, blade coating, screen printing, inkjet printing, stereolithography, vacuum deposition and/or liquid additive manufacturing. This way, a compact and flexible design of the sensor layer can be achieved, which simplifies a manufacturing and application of the electronic system management tape.

The sensor layer may additionally comprise any number of further surface-mounted devices, through-hole devices and/or printed devices configured to provide additional functions not relating to a management of parameters. For example, the sensor layer may comprise an identification element for allowing an external device to identify the type of battery or other system the electronic system management tape is applied to. The identification element may be a scanner-readable microchip, a barcode printed onto the substrate, or any other type of identification element known to the person skilled in the art.

In a further embodiment of the invention, the sensor layer may comprise a single sensor arranged in a central area of the sensor layer. A central area of the sensor layer is to be understood as a part of the main side of the sensor layer which is surrounded by an edge area of the sensor layer. Preferably, the central area is centered around a center of the main side and comprises only 50 %, most preferably only 25 % of an entire area of the main side. This way, an efficient monitoring of the battery cells can be achieved. Due to parameters like heat, strain and pressure spreading throughout the battery cells, placing a single sensor in the center enables detecting a change in these parameters regardless of the position of the origin of this change.

In a further embodiment of the invention, the sensor layer may comprise an array of sensors dispersed over the sensor layer. The sensors may be the same type of sensor or different types of sensors. The sensors being dispersed over the sensor layer is to be understood as the sensors being arranged such that an effective sensing area of all sensors combined is at least 25 %, preferably at least 50 %, most preferably at least 75 % of the entire area of the main side. The sensors may be arranged in any type of pattern. Preferably, the sensors are arranged in a recurring pattern, especially preferably, the sensors are arranged in a matrix pattern. This way, a change in the parameters of the battery cells can not only be detected, but its origin can also be located. Additionally, the multitude of sensors provides redundancy in case of one or more sensors failing. Finally, arranging the sensors as a recurring pattern which extends over the entire substrate allows for an easy size adjustment of the battery management layer without the need to redesign the sensors, since the substrate can simply be cut or stamped to the required size while the sensor structure keeps its functionality.

In a further embodiment of the invention, the adhesive layer may comprise at least one flame retardant additive, at least one intumescent additive and/or at least one non-flammable material. Materials and objects that are considered "flame retardant" display at least one retardation mechanism when heated up past a predefined threshold temperature. This retardation mechanism may result either in a cooling down of the material or object or in a creation of a non-flammable material which provides thermal shielding and/or dilution of combustible gases. Known retardation mechanisms include endothermic degradation, surface charring, thermal degradation into non-flammable gases and thermal degradation into non-flammable halides. Flame retardant additives are substances which are added to a material or object which in itself is not flame retardant in order to create a flame retardant material or flame retardant object. It is important to differentiate between materials which are flame retardant and materials which are non-flammable. Materials which are non-flammable exhibit a flash point of at least 1200°C and are therefore unable to be ignited by orange flames, but do not display any retardation mechanisms. Examples of non-flammable materials can be found among nitrides, ceramics, silica, carbides, glass, minerals, metals, and/or metal oxides. For example, the adhesive layer may comprise non-flammable materials in the form of embedded carbon fibers or glass fibers. While some flame retardant materials are able to create non-flammable materials as part of their retardation mechanism, they are not required to be non-flammable in their basic state. Preferably, the adhesive layer comprises at least one flame retardant additive. Flame retardant additives can be separated into four distinct classes. A flame retardant additive may be a mineral, which commonly display endothermic degradation. Examples of flame retardant additives which are a mineral are aluminium hydroxide, magnesium hydroxide, huntite, hydromagnesite, red phosphorus as well as hydrates and borates. Alternatively, a flame retardant additive may be an organohalogen compound, which commonly display thermal degradation into halides. Examples of flame retardant additives which are organohalogen compounds are organochlorines such as chlorendic acid derivatives and chlorinated paraffins, organobromines such as decabromodiphenyl ether, decabromodiphenyl ethane, polymeric brominated compounds such as brominated polystyrenes, brominated carbonate oligomers, brominated epoxy oligomers, tetrabromophthalic anhydride, tetrabromobisphenol A and hexabromocyclododecane. Alternatively, a flame retardant additive may be an organophosphorous compound, which commonly display surface charring. Examples of flame retardant additives which are organophosphorous compounds are organophosphates such as triphenyl phosphate, resorcinol bis, bisphenol A diphenyl phosphate and tricresil phosphate, phosphonates such as dimethyl methylphosphonate, and phosphinates such as aluminium diethyl phosphinate. Alternatively, a flame retardant additive may be an organic compound. Examples of flame retardant additives which are organic compounds are carboxylic acids and dicarboxylic acids, such as tannic acid.

Materials and objects that are considered "intumescent" display a swelling or expanding mechanism when heated up past a predefined threshold temperature. This creates a layer of material filled with cavities, which makes it more difficult for heat and/or flames to penetrate. It is possible for a material to be flame retardant and intumescent at the same time. For example, soft char materials produce a microporous carbonaceous foam which is not only non-flammable but also filled with cavities. Examples of soft char materials include mixtures of ammonium polyphosphate, pentaerythritol and melamine placed in a matrix formed by vinyl acetate copolymers or styrene acrylates. Preferably, the adhesive layer comprises intumescent additives. Intumescent additives may for example be foaming agents. The foaming agents may be shells filled with compressed gas which are configured to break expand at the predefined threshold temperature. The shells may consist of plastic, glass or ceramics. Alternatively, the intumescent additive may be layered compounds, wherein the distance between the individual layers increases as the intumescent additive swells or expands. Expandable graphite is an example of such a layered compound.

This way, a functionality of the electronic system management tape can be increased while keeping the design and manufacturing simple. Due to the adhesive layer providing both a fixing of the electronic system management tape as well as flame retardant and/or intumescent properties, a electronic system management tape can be provided that can either omit additional flame retardant layers or intumescent layers for an inexpensive and simple design, or create redundancies and increased safety and reliability.

Additionally, or alternatively, any other layer of the electronic system management tape, such as the sensor layer and/or the electrically insulating layer for example, may comprise at least one flame retardant additive, at least one intumescent additive and/or at least one non-flammable material.

In a further embodiment of the invention, the adhesive layer is debondable. Preferably, the adhesive layer exhibits two states, the first state having high bonding strength and the second state having low bonding strength. Preferably, the adhesive layer is in the first state during and after an application of the electronic system management tape. Preferably, in the second state, the electronic system management tape is removable by hand. The adhesive layer may be transitioned from the first state to the second state via irradiation, heating, application of a solvent and/or stretching of the electronic system management tape. It is possible that the adhesive layer is irreversibly debondable, preferably, the adhesive layer is reversibly debondable. For example, the adhesive layer may be a radiation-curable adhesive layer, wherein a further irradiation cures the adhesive layer to the point of reducing its bonding strength. Alternatively, the adhesive layer may be a hotmelt adhesive layer, wherein a heating melts the adhesive layer, thereby reducing the bonding strength. Alternatively, the adhesive layer may be a soluble adhesive layer, such as for example a rubber-based adhesive layer, wherein the solvent breaks up the polymer structure, thereby reducing the bonding strength. Alternatively, the adhesive layer may be a strippable adhesive layer with an elongation at break of at least 100 %, such as an acrylonitrile-butadiene-rubber-based adhesive layer for example, wherein a stretching causes the adhesive layer to taper, thereby reducing the bonding strength. Alternatively, the adhesive layer may be a dry adhesive layer, which only comprises a single state. Dry adhesive layers are to be understood as layers comprising a multitude of surface elements providing adhesion due to Van der Waals forces. The surface elements preferably have an elongated shape and may either have a homogenous thickness along their length or thicken towards a free end, resulting in a mushroom-like shape. This way, the electronic system management tape can not only provide functionality regarding an assembly of the battery and a management of battery parameters, it can also provide functionality regarding a disassembly, repairability and/or recyclability of the battery. Advantageously, the electronic system management tape can be disassembled and re-assembled any number of times.

In a further embodiment of the invention, the electronic system management tape comprises a carrier layer for providing structural integrity to the electronic system management tape. The carrier layer may be a foil layer or a textile layer. In case of the carrier layer being a foil layer, the carrier layer may be a plastic foil or a metal foil. In case of the carrier layer being a textile layer, the carrier layer may comprise plastic fibers, glass fibers and/or carbon fibers. The carrier layer may comprise a metal, a plastic and/or a cellulose. The carrier layer may comprise at least one flame retardant additive, at least one intumescent additive, at least one electrically insulating additive, at least one electrically conductive additive, at least one thermally insulating additive and/or at least one thermally conductive additive. Preferably, in case the electronic system management tape is a double-sided tape, the carrier layer may form a central layer of the electronic system management tape, wherein an equal number of layers may be arranged on each side of the carrier layer. This way, the battery adhesive tape may be wound and/or stamped without the risk of displacing the layers relative to each other.

In a further embodiment of the invention, the carrier layer is a foam layer. The carrier layer may be an open-cell foam layer or a closed-cell foam layer. In case of the carrier layer being an open-cell foam layer, the carrier layer preferably is part of a carrier laminate consisting of the carrier layer sandwiched between two foil layers, which are preferably plastic foils. Preferably, the carrier layer is a plastic foam layer. The carrier layer may be a PET foam layer, a PP foam layer, a PVC foam layer or an acrylic foam layer. This way, the carrier layer can not only provide structural integrity, but can also provide compressibility and shock resistance, thereby allowing for a electronic system management tape that can either omit additional layers for an inexpensive and simple design, or create redundancies and increased safety and reliability.

In a further embodiment of the invention, the carrier layer is part of the sensor layer. Preferably, the carrier layer forms the substrate of the sensor layer. The carrier layer may comprise a fiber-reinforced plastic such as glass epoxy or a cellulose impregnated with resin and form a substrate similar to traditional circuit boards. Preferably, the carrier layer is a plastic foil layer and forms a substrate similar to modern flexible circuit boards. This way, a design of the electronic system management tape can be further simplified by uniting the functionality of the sensor layer and the carrier layer within a single layer.

In a further embodiment of the invention, the carrier layer comprises at least one flame retardant additive, at least one intumescent additive and/or at least one non-flammable material. This way, the carrier layer can not only provide structural integrity, but can also provide flame retardancy or intumescence, thereby allowing for an electronic system management tape that can either omit additional layers for an inexpensive and simple design or create redundancies and increased safety and reliability.

In a further embodiment of the invention, the carrier layer and the electrically insulating layer are identical. For example, in case the carrier layer is embodied as a plastic carrier, such as a PET carrier, it can provide both structural integrity and electrical insulation. This way, additional layers providing functional integrity or electrical insulation can either be omitted for an inexpensive and simple design, or added to create redundancies and increased safety and reliability.

In a further embodiment of the invention, the electronic system management tape further comprises at least one cavity extending from one side of a electronic system management tape main body to an opposite side of the electronic system management tape main body. The cavity may be formed by gaps arranged in one or more layers of the electronic system management tape. For example, in case of the electronic system management tape comprising a foam layer, the gaps may be created by removing part of the foam layer. The electronic system management may comprise a tube which is placed inside the gaps and configured to transport a fluid through the electronic system management tape. This way, an electronic system management tape with increased functionality can be provided. The cavity and/or tube may be used to transport cooling fluid through the electronic system management tape to facilitate a transfer of heat from within different parts of the electronic system towards a heat sink or cooling plate.

Additional aspects are disclosed in the following description of the figures.

It is shown:
- Fig. 1: A schematic illustration of a battery according to the invention in a cross-sectional view.
- Fig. 2: A schematic illustration of an electronic system management tape of the battery in a cross-sectional view.
- Fig. 3: A schematic illustration of a sensor layer of an electronic system management tape according to a further embodiment of the invention in a top-down view.
- Fig. 4: A schematic illustration of the electronic system management tape of Fig. 3 in a side view.

For the sake of visibility, in figures depicting multiple functionally identical elements, only one of these elements is given a reference sign.

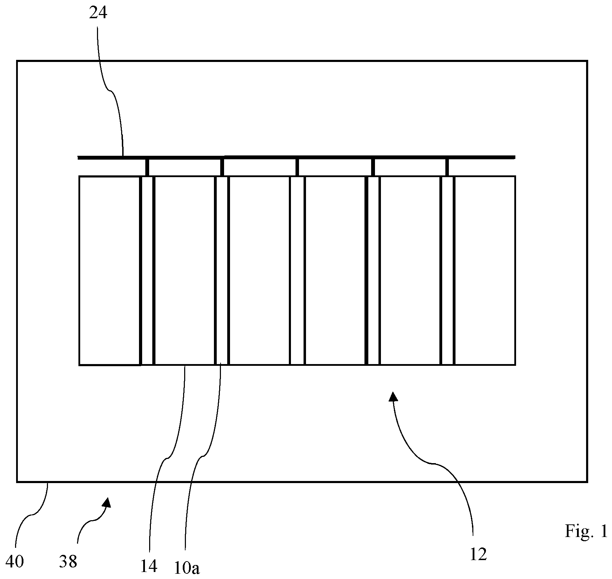

Figure 1 shows an electronic system that is embodied as a battery 38. Alternatively, the electronic system may be any other electronic system, such as an engine system, brake system, fuel cell, cooling system or heating system for example. The battery 38 is an electric vehicle battery. Alternatively, the battery 38 may also be designed for use in any other electric device requiring an integrated electric power source or be part of a stationary battery system. For the sake of visibility, many elements that are commonly present in electric vehicle batteries but do not relate to the invention are omitted.

The battery 38 comprises a casing 40. The casing 40 may consist of any suitable metal, such as aluminum or steel for example. The battery 38 comprises a multitude of battery cells 14, which are housed within the casing 40. The battery cells 14 are prismatic cells. Alternatively, the battery cells 14 may be pouch cells or cylindrical cells. The battery cells 14 each comprise two battery terminals (not shown) and are arranged to form a battery cell stack 12. The battery 38 comprises an electronic system management unit, which is embodied as a battery management system 24. The battery management system 24 is a flexible circuit board arranged on a side of the battery cell stack 12 where the battery terminals of the battery cells 14 are arranged.

The battery 38 comprises a multitude of electronic system management tapes 10a. The electronic system management tapes 10a are each arranged between two adj acent battery cells 14. The electronic system management tapes 10a are each electrically connected to the battery management system 24.

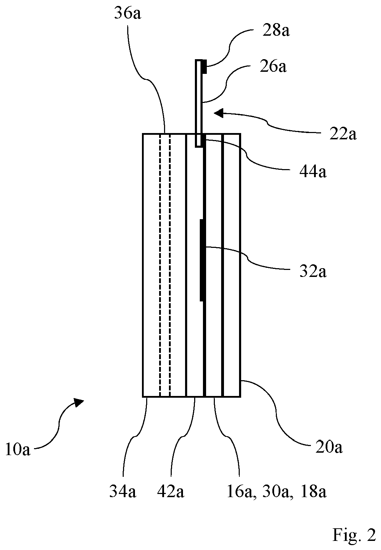

Figure 2 shows one of these electronic system management tapes 10a in detail.

The electronic system management tape 10a is a single-sided tape and provides a monitoring, a compressibility, a cooling, an electrical insulation and a flame retardancy. Alternatively, the electronic system management tape 10a could be a double-sided tape and additionally provide a fixation of the battery cells 14. The electronic system management tape 10a comprises, from left to right, a carrier layer 34a, an intermediate adhesive layer 42a, a sensor layer 16a which partly constitutes an electrically insulating layer 18a, and an adhesive layer 20a. Additionally, the electronic system management tape 10a comprises a communication unit 22a for communication between the sensor layer 16a and the battery management system 24.

The carrier layer 34a is a plastic foam layer which comprises flame retardant additives. The carrier layer 34a is a polyethylene foam comprising organophosphorous compounds. Alternatively, the carrier layer 34a may be any kind of suitable foil layer, textile layer or foam layer and comprise any kind of suitable metal, plastic and/or cellulose materials. The carrier layer 34a comprises a cavity 36a reaching from one side of the electronic system management tape 10a to an opposite side of the electronic system management tape 10a. The cavity 34a is formed by a cylindrical gap or channel in the carrier layer 34a. Alternatively, the cavity 34a may have any other suitable shape. The cavity 34a allows cooling fluid to pass through the electronic system management tape 10a.

The intermediate adhesive layer 42a fixes the carrier layer 34a and the sensor layer 16a relative to each other. The intermediate adhesive layer 42a comprises an acrylate adhesive as known in the art. Depending on the application and the requirements, the intermediate adhesive layer 42a may additionally comprise flame retardant additives, intumescent additives, non-flammable substances, electrically insulating additives, thermally insulating additives and/or thermally conductive additives.

The sensor layer 16a comprises a substrate 30a and a single sensor 32a. The substrate 30a is a PET foil layer. The substrate 30a and the electrically insulating layer 34b are identical. The sensor 32a is a printed device which consists of a conductive silver paste and is coated onto a surface of the substrate 30a. Alternatively, the sensor 32a could be a surface-mounted device or a through-hole device. The sensor 32a is arranged in a central area of the sensor layer 16a.

The sensor 32a is a pressure sensor. Alternatively, the sensor 32a may be a strain sensor, a temperature sensor, a moisture sensor, a voltage sensor, a current sensor and/or any type of applicable sensor. The sensor 32a comprises at least one track (not shown) made of the conductive silver paste. Depending on the type of sensor used, the sensor 32a may comprise a single track following a meandering pattern, the meandering pattern being contained within a rectangular area, or multiple tracks, which form electrodes interwoven via a multitude of tines, the electrodes also being contained within the rectangular area. In this case, the rectangular area is a square area. Alternatively, the area may have any other shapes, such as oval shape for example. The sensor 32a comprises at least two terminal sections which extend away from the rectangular area. For the sake of visibility, figure 2 shows the sensor 32a as a line with an exaggerated thickness, wherein a length of the line indicates a size of the rectangular area.

The communication unit 22a is a connector strip which is separate from the layers 34a, 36a, 16a, 18a, 20a of the electronic system management tape 10a. The communication unit 22a comprises a connector portion 26a. The connector portion 26a is a PET strip. The connector portion 26a extends outwards from an electronic system management tape main body. The communication unit 22a comprises a connector 28a arranged on an end of the connector portion 26a. The connector 28a is an anisotropic conductive adhesive film. The connector 28a is a pressure-sensitive anisotropic conductive adhesive film. The connector 28a is electrically connected to the electronic system management system 24, which only requires the end of the connector portion 26a being pressed against a terminal (not shown) of the battery management system 24.

Figure 2 shows the connector portion 22a in a non-connected state. In a connected state as shown in figure 1, the connector portion 22a extends through holes in flexible circuit board of the battery management system 24, with the connector 28a being connected to terminals (not shown) of the battery management system 24 arranged on a side of the battery management system 24 opposite to the battery cell stack 14. Alternatively, the connector portion 22a may be partially folded onto a side of the battery cells 14 facing the battery management system 24, in which case the connector 28a is connected to terminals of the battery management system 24 arranged on a side of the battery management system 24 facing the battery cell stack 14.

The communication unit 22a comprises a further connector 44a which is arranged at a further end of the connector portion 26a opposite to the end. The further connector 44a is functionally identical to the connector 28a. The further connector 28a is electrically connected to the sensor layer 16a. The further connector 28a is electrically connected to the terminals of the sensor 32a. The communication unit 22a comprises tracks (not shown) which run between the further connector 44a and the connector 28a and form an electrical path through which signals can travel from the terminals of sensor 32a to the battery management system 24. The number of tracks of the communication unit 22a is equal to the number of terminals of the sensor 32a.

The adhesive layer 20a is a pressure-sensitive UV-curable acrylate adhesive layer comprising flame retardant additives. The adhesive layer 20a is arranged on an outer side of the electronic system management tape 10a and fixes a position of the electronic system management tape 10a relative to the battery cells 14. The adhesive layer 20a is debondable via irradiation.

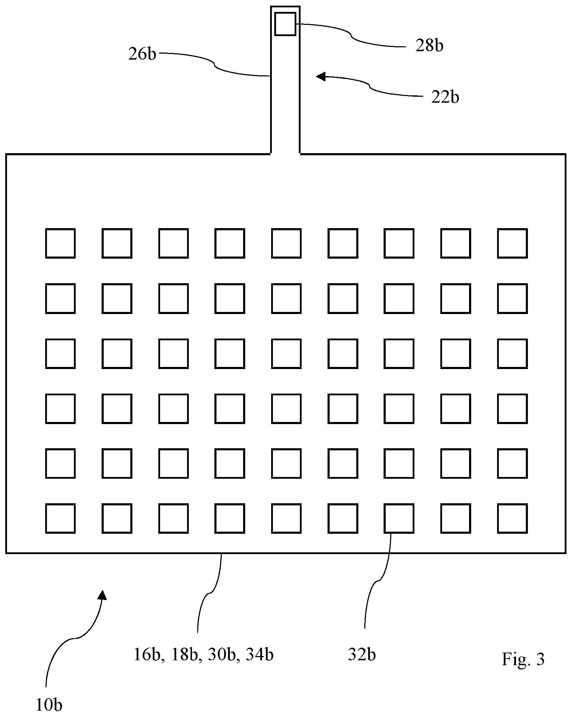

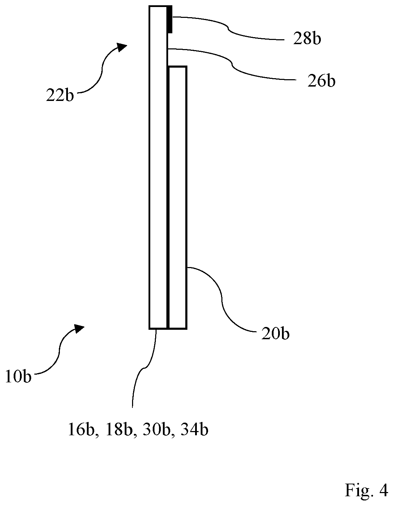

Figures 3 and 4 show another embodiment of an electronic system management tape 10b according to the invention. This electronic system management tape 10b is a much more simple and compact design while still providing a multitude of functionalities. In the following, for the sake of brevity, only differences between the electronic system management tape 10a of figures 1 and 2 and the electronic system management tape 10b of figures 3 and 4 are described.

The electronic system management tape 10b does not comprise an intermediate adhesive layer. The electronic system management tape 10b does not comprise a foam layer. The electronic system management tape 10b comprises a carrier layer 34b which is part of a sensor layer 16b. The carrier layer 34b is a substrate 30b of the sensor layer 16b, which also makes the carrier layer 34b an electrically insulating layer 34b.

The electronic system management tape 10b comprises a communication unit 22b. The communication unit 22b comprises a connector portion 26b which is formed by a part of the substrate 30b that extends outwards from the main body of the electronic system management tape 10b. The communication unit 22b only comprises a single connector 28b.

The sensor layer 16b comprises an array of sensors 32b dispersed over the sensor layer 16b. The sensors 32b are arranged in a matrix pattern. Each of the sensors 32b comprises tracks (not shown) which are arranged in a manner identical to the tracks of the sensor 32a of figure 2 but within smaller rectangular areas. The array of sensors 32b comprises additional tracks electrically connecting the sensors 32b with each other. The array of sensors 32b comprises a number of terminals proportionate to the number of sensors 32b. The terminals run along both sides of the sensor layer 16b, converge under the connector portion 26b and run along the connector portion 26b until they reach the connector 28b.

### Reference signs

- 10: Electronic system management tape
- 12: Battery cell stack
- 14: Battery cell
- 16: Sensor layer
- 18: Electrically insulating layer
- 20: Adhesive layer
- 22: Communication unit
- 24: Battery management system
- 26: Connector portion
- 28: Connector
- 30: Substrate
- 32: Sensor
- 33: Battery
- 34: Carrier layer
- 36: Cavity
- 38: Electronic system
- 40: Casing
- 42: Intermediate adhesive layer
- 44: Further connector

## Claims

1. An electronic system management tape (10a-b) for application on an electronic system (38), comprising: a sensor layer (16a-b), an electrically insulating layer (18a-b), an adhesive layer (20a-b) for affixing to the electronic system (38), and a communication unit (22a-b) for communicating between the sensor layer (16a-b) and an electronic system management unit (24).

2. The electronic system management tape (10a-b) according to claim 1, wherein the communication unit (22a-b) comprises a connector portion (26a-b) extending outwards from a of an electronic system management tape main body and a connector (28a-b) arranged on the connector portion (26a-b).

3. The electronic system management tape (10a-b) according to claim 2, wherein the connector (28a-b) comprises an anisotropic conductive adhesive film.

4. The electronic system management tape (10a-b) according to any of the preceding claims, wherein the sensor layer (16a-b) comprises a substrate (30a-b) and at least one sensor (32a-b) coated onto a surface of the substrate (30a-b).

5. The electronic system management tape (10a) according to any of the preceding claims, wherein the sensor layer (16a) comprises a single sensor (32a) arranged in a central area of the sensor layer (16a).

6. The electronic system management tape (10b) according to any of the claims 1 to 4, wherein the sensor layer (16b) comprises an array of sensors (32b) dispersed over the sensor layer (16b).

7. The electronic system management tape (10a-b) according to any of the preceding claims, wherein the adhesive layer (20a-b) comprises at least one flame retardant additive, at least one intumescent additive and/or at least one non-flammable material.

8. The electronic system management tape (10a-b) according to any of the preceding claims, wherein the adhesive layer (20a-b) is debondable.

9. The electronic system management tape (10a-b) according to any of the preceding claims, further comprising a carrier layer (34a-b) for providing structural integrity.

10. The electronic system management tape (10a) according to claim 9, wherein the carrier layer (34a) is a foam layer.

11. The electronic system management tape (10b) according to claim 9 or 10, wherein the carrier layer (34b) is part of the sensor layer (16b).

12. The electronic system management tape (10a) according to any of the claims 9 to 11, wherein the carrier layer (34a) comprises at least one flame retardant additive, at least one intumescent additive and/or at least one non-flammable material.

13. The electronic system management tape (10b) according to any of the claims 9 to 12, wherein the carrier layer (34b) and the electrically insulating layer (18b) are identical.

14. The electronic system management tape (10a) according to any of the preceding claims, further comprising at least one cavity (36a) extending from one side of an electronic system management tape main body to an opposite side of the electronic system management tape main body.

15. A battery comprising: at least one individual battery cell (14), a battery management system (24), and an electronic system management tape (10a-b) according to any of the preceding claims, wherein the electronic system management tape (10a-b) is affixed to the battery cell (14).

## Amended claims

### Amended claims in accordance with Rule 137(2) EPC.

1. An electronic system management tape (10a-b) for application on a battery (38) comprising a multitude of battery cells (14) arranged in form of a battery cell stack (12), configured to be either arranged between two adjacent battery cells (14), wrapped around at least three sides of one of the battery cells (14), or placed on a side of a battery cell stack (12), comprising: a sensor layer (16a-b) for monitoring of battery cell parameters, an electrically insulating layer (18a-b) for an electrical insulation of individual battery cells which has a thickness of at least 5 µm and prevents battery currents exhibiting a voltage of up to 800 V from penetrating the electrically insulating layer (18a-b), an adhesive layer (20a-b) for affixing to one of the battery cells (14) or the battery cell stack (12), and a communication unit (22a-b) for communicating between the sensor layer (16a-b) and a battery management system (24).

2. The electronic system management tape (10a-b) according to claim 1, wherein the communication unit (22a-b) comprises a connector portion (26a-b) extending outwards from an electronic system management tape main body and a connector (28a-b) arranged on an end of the connector portion (26a-b), the connector portion (26a-b) either being part of a substrate of the sensor layer (16a-b) or a connector strip which comprises a further connector (44a) arranged on a further end of the connector portion (26a-b), the further connector (44a) connecting the connector portion (26a-b) to the sensor layer (16a-b).

3. The electronic system management tape (10a-b) according to claim 2, wherein the connector (28a-b) comprises an anisotropic conductive adhesive film.

4. The electronic system management tape (10a-b) according to any of the preceding claims, wherein the sensor layer (16a-b) comprises a substrate (30a-b) and at least one sensor (32a-b) coated onto a surface of the substrate (30a-b).

5. The electronic system management tape (10a) according to any of the preceding claims, wherein the sensor layer (16a) comprises a single sensor (32a) arranged in a central area of the sensor layer (16a).

6. The electronic system management tape (10b) according to any of the claims 1 to 4, wherein the sensor layer (16b) comprises an array of sensors (32b) dispersed over the sensor layer (16b).

7. The electronic system management tape (10a-b) according to any of the preceding claims, wherein the adhesive layer (20a-b) comprises at least one flame retardant additive, at least one intumescent additive and/or at least one non-flammable material.

8. The electronic system management tape (10a-b) according to any of the preceding claims, wherein the adhesive layer (20a-b) exhibits two states, the first state having high bonding strength and the second state having low bonding strength.

9. The electronic system management tape (10a-b) according to any of the preceding claims, further comprising a carrier layer (34a-b) for providing structural integrity.

10. The electronic system management tape (10a) according to claim 9, wherein the carrier layer (34a) is a foam layer for a compensation of pressure due to battery cell breathing.

11. The electronic system management tape (10b) according to claim 9 or 10, wherein the carrier layer (34b) is part of the sensor layer (16b).

12. The electronic system management tape (10a) according to any of the claims 9 to 11, wherein the carrier layer (34a) comprises at least one flame retardant additive, at least one intumescent additive and/or at least one non-flammable material.

13. The electronic system management tape (10b) according to any of the claims 9 to 12, wherein the carrier layer (34b) and the electrically insulating layer (18b) are identical.

14. The electronic system management tape (10a) according to any of the preceding claims, further comprising at least one cavity (36a) extending from one side of an electronic system management tape main body to an opposite side of the electronic system management tape main body for transporting cooling fluid through the electronic system management tape (10a) to facilitate a transfer of heat from within different parts of the battery (38) towards a heat sink or cooling plate.

15. A battery (38) comprising: a casing (40), a multitude of battery cells (14) being arranged into a battery cell stack (12) arranged inside the casing (40), a battery management system (24) arranged inside the casing (40), and an electronic system management tape (10a-b), wherein the electronic system management tape (10a-b) is arranged between two adjacent battery cells (14), wrapped around at least three sides of the battery cell (14), or placed on a side of the battery cell stack (12), the electronic system management tape (10a-b) comprising: a sensor layer (16a-b) which monitors battery cell parameters, an electrically insulating layer (18a-b) which electrically insulates individual battery cells, has a thickness of at least 5 µm and prevents battery currents exhibiting a voltage of up to 800 V from penetrating the electrically insulating layer (18a-b), an adhesive layer (20a-b) which affixes the electronic system management tape (10a-b) to one of the battery cells (14) or the battery cell stack (12), and a communication unit (22a-b) which communicates between the sensor layer (16a-b) and the battery management system (24).
